# EUROPÄISCHE PATENTSCHRIFT

(11) **EP 3 596 808 B1**
(45) Veröffentlichungstag und Bekanntmachung des Hinweises auf die Patenterteilung: **28.07.2021**
(21) Anmeldenummer: 18711887.2
(22) Anmeldetag: 13.03.2018
(51) Int. Cl.: H02K 7/102, F16H 25/24

(54) **ELEKTROMOTORISCHER MÖBELANTRIEB MIT EINEM ANTRIEBSMOTOR MIT BREMSEINRICHTUNG**
ELECTROMOTIVE FURNITURE DRIVE COMPRISING A DRIVE MOTOR WITH A BRAKE DEVICE
ENTRAÎNEMENT DE MEUBLE À MOTEUR ÉLECTRIQUE DOTÉ D'UN MOTEUR D'ENTRAÎNEMENT ÉQUIPÉ D'UN DISPOSITIF DE FREINAGE

(30) Priorität: 14.03.2017 DE 202017101480 U
(43) Veröffentlichungstag der Anmeldung: 22.01.2020
(73) Patentinhaber: DewertOkin Technology Group Co., Ltd., Jiaxing City, Zhejiang Province (CN)
(72) Erfinder: MÜLLER, Sven, 32278 Kirchlengern (DE)
(74) Vertreter: Kleine, Hubertus
(86) Internationale Anmeldenummer: PCT/EP2018/056296
(87) Internationale Veröffentlichungsnummer: WO 2018/167094

(56) Entgegenhaltungen:
- EP-A1- 1 310 703
- EP-A1- 1 637 775
- DE-A1-102005 063 000
- DE-A1-102015 220 680
- US-A1- 2012 227 522
- US-A1- 2013 169 088

## Beschreibung

Die Erfindung betrifft einen elektromotorischen Möbelantrieb mit einem Antriebsmotor, wobei der Antriebsmotor eine Antriebswelle aufweist, die mit einer Bremseinrichtung mechanisch gekoppelt ist, wobei die Bremseinrichtung eine umschlingende Schlingfeder aufweist.

Ein elektromotorischer Möbelantrieb mit einem Antriebsmotor und einer Bremseinrichtung geht z.B. aus der Druckschrift DE 20 2015 107 053 hervor, wobei die Bremseinrichtung ein Bremselement umfasst, welches direkt auf die Antriebswelle des Antriebsmotors wirkt und ein gleichmäßiges Bremsmoment in beiden Drehrichtungen erzeugt. Damit können drehrichtungsunabhängig gleiche Bremsdrehmomente erzeugt werden, so dass der elektromotorische Möbelantrieb bei Stillstand seine mechanische Selbsthemmung erfährt und eine bereits angehobene Last sicher gehalten werden kann. Als Nachteil ist zu sehen, dass das Bremsdrehmoment in beiden Drehrichtungen der Antriebswelle erzeugt wird.

Ein elektromotorischer Möbelantrieb der eingangs genannten Art ist aus der Druckschrift US 9 431 871 bekannt, wobei drei Bremselemente in Segmentform die Antriebswelle umgeben und direkt von einer umschlingenden Schlingfeder umhüllt sind, so dass in nur einer Drehrichtung der Antriebswelle ein Bremsdrehmoment erzeugt wird. Als nachteilig kann hier der erhöhte Montageaufwand genannt werden und dass zusätzlich zur Vorspannkraft der Schlingfeder eine relativ schlecht kontrollierbare Zusatzspannkraft resultierend aus der Eytelwein'schen Umschlingung erfolgt, was eine hohe Toleranz bei der Ausübung der Bremsdrehmomente bedeutet.

Die Druckschrift US 2012/0227522 A1 beschreibt einen elektromotorischen Möbelantrieb, bei dem eine Bremstrommel über eine Freilaufeinrichtung auf eine Spindel des Antriebs einwirkt. Die Bremstrommel wird über eine Schlingfeder an ihrem äußeren Durchmesser gebremst, wobei die Schlingfeder mit einer Halterung des Möbelantriebs so gekoppelt ist, dass die Bremswirkung von einer auf die Halterung einwirkenden Kraft beeinflusst ist. Es wird so erreicht, dass bei abgeschaltetem Antriebsmotor eine Last unabhängig von ihrem Gewicht gleichmäßig und kontrolliert abgelassen wird. Da die Bremseinrichtung direkt auf die Spindel wirkt, muss sie für entsprechend große Kräfte ausgelegt sein. Zudem ist zusätzlich zur Schlingfeder eine Freilaufeinrichtung, z.B. mithilfe von Freilaufrollen vorzusehen.

Die Druckschrift DE 10 2015 220 680 A1 zeigt eine Freilaufeinrichtung mit Wälzkörpern und einer Schlingfeder zur Betätigung einer Kupplung eines Fahrzeugs.

Der vorliegenden Erfindung liegt die Aufgabe zugrunde, einen elektromotorischen Möbelantrieb mit einem Antriebsmotor und mit einer Bremseinrichtung zu schaffen, welche die oben genannten Nachteile nicht mehr aufweist, darüber hinaus leicht zu montieren ist und bei dem die Bremsdrehmomente in einem geringen Toleranzfeld liegen.

Die Lösung der Aufgabenstellung ist gemäß der Ausführung nach Anspruch 1 gegeben. Weitere vorteilhafte Ausgestaltungen sind Gegenstand der abhängigen Ansprüche.

Bei einem erfindungsgemäßen elektromotorischen Möbelantrieb der eingangs genannten Art umfasst die Bremseinrichtung ein Bremselement, welches dazu ausgebildet ist, die Antriebswelle in einer Drehrichtung mit einem Bremsdrehmoment zu beaufschlagen, wobei das Bremselement in mechanischer Wirkverbindung mit einem Koppelelement steht, und wobei die Schlingfeder mit mehr als einer umschlingenden Windung auf eine äußere Manteloberfläche des Koppelements aufgesetzt ist. Das Bremselement ist auf die Antriebswelle des Möbelantriebs aufgesetzt und weist eine lichte Innenweite auf, die in einem nicht montierten Zustand etwas kleiner ist als ein Außendurchmesser der Antriebswelle.

In einer vorteilhaften Ausgestaltung weist der elektromotorische Möbelantrieb einen Getriebeantriebsstrang auf, welcher durch den Antriebsmotor betrieben wird und welcher eine hohe Drehzahl des Antriebsmotors entweder in eine geringere Winkelgeschwindigkeit oder in eine geringe Lineargeschwindigkeit untersetzt. Ein typischer Getriebeantriebsstrang weist ein Schneckenrad auf, deren Verzahnung mit einer Verzahnung des Antriebsmotors kämmt, und weist ferner ein Spindelmutter-Hubgetriebe auf, das durch das Schneckenrad mit Rotationsenergie beaufschlagt wird und die Rotationsbewegung in eine lineare Abtriebsbewegung transformiert.

Gemäß einer typischen Ausführung ist die Gewindespindel in einem Gehäuse des elektromotorischen Möbelantriebs ortsfest angeordnet, jedoch relativ dazu drehbar gelagert und wird durch den Antriebsmotor rotierend betrieben, während auf die Gewindegänge der Spindel eine Spindelmutter aufgesetzt ist, die wiederrum bei Rotation der Gewindespindel die abtreibende Linearbewegung vollzieht und ferner mit weiteren Elementen wie Hubrohren, Verstellelementen und/oder Gabelköpfen und schlußendlich mit einem Möbelbauteil in mittelbarer oder in unmittelbarer Verbindung steht. Bei Betrieb des elektromotorischen Möbelantriebs in einem Möbel erfolgt eine Verstellung wenigstens zweier Möbelbauteile relativ zueinander. Auch die Anordnung mehrerer Antriebsmotore und/oder Spindelmutter-Hubgetriebe in einem Gehäuse ist denkbar.

Der Getriebeantriebsstrang des vorliegenden elektromotorischen Möbelantriebs ist nicht selbsthemmend ausgeführt, so dass sich das daran angeschlossene Möbelbauteil bei Abschalten des Antriebsmotors in Richtung der Schwerkraft verstellen würde. Durch die Bremseinrichtung wird ein dem schwerkraftbedingten Absenken des angeschlossenen Möbelbauteils entgegenwirkendes Bremsmoment erzeugt. Bremsvorrichtungen gemäß Stand der Technik verfügen über ein Bremselement, welches unabhängig der Drehrichtung des Antriebsmotors ein konstantes Bremsdrehmoment erzeugt. Das Bremselement weist z.B. federelastische Abschnitte auf und stellt mittelbar oder unmittelbar Bremsflächen zur Verfügung, welche direkt mit der Antriebswelle des Antriebsmotors in Verbindung stehen. Ein stets gleichmäßig erzeugbares Bremsdrehmoment ist somit gegeben.

Das erzeugbare Bremsdrehmoment ist dabei im Vergleich zum Antriebsdrehmoment des Antriebsmotors relativ klein und das Bremsdrehmoment ist vorab durch die Dimensionierung des Bremselements und der Andruckkräfte einstellbar. Die Höhe dieses voreingestellten Bremsdrehmoments ist so gewählt, dass die Selbsthemmung des Getriebeantriebsstranges einschließlich eines Sicherheitsaufschlages für den Betriebszustand des regulären Betriebs gegeben ist.

Erfindungsgemäß steht das Bremselement mit einem Koppelelement in mechanischer Wirkverbindung. Die einfachste mechanische Wirkverbindung ist durch eine Art Klauenkupplung gegeben, wobei wenigstens eine Klaue, vorzugsweise drei im Umfang gleichmäßig angeordnete Klauen mit den jeweils korrespondierenden Ausnehmungen vorgesehen sind, so dass Abschnitte von Bremselement und Koppelelement klauenartig ineinander greifen. Die klauenartige Verbindung ist mit einem geringen Spiel versehen und erfolgt formschlüssig. Dabei kann das Bremselement vollständig oder alternativ zumindest abschnittsweise in einer konzentrischen Ausnehmung des Koppelelements angeordnet sein. Andere Kräfte, wie beispielsweise Radialkräfte, die durch die Schlingfeder auf das Koppelelement ausgeübt werden, werden somit nicht auf das Bremselement übertragen, so dass diese das Bremselement nicht beeinflussen.

Das Koppelelement verfügt über eine Manteloberfläche, welche vorzugsweise als äußere Manteloberfläche und alternativ als innere Manteloberfläche ausgebildet ist. Die Manteloberfläche ist beispielsweise zylindrisch ausgebildet. Mit der Manteloberfläche steht eine umschlingende Schlingfeder mit bevorzugt mehr als einer Umschlingungswindung in reibschlüssiger Verbindung. Das freie Ende der Schlingfeder ist als Halteelement beispielsweise in Form eines Hakens ausgebildet und zur Befestigung in einem Gehäuse vorgesehen. Derartige Gehäuse sind durch das Gehäuse des Antriebsmotors gebildet oder können alternativ an das Gehäuse des Antriebsmotors angesetzt sein oder ferner können derartige Gehäuse durch das Gehäuse des elektromotorischen Möbelantriebs oder eines ihrer Komponenten selbst gebildet sein. Das Halteelement ist derart angeordnet, dass es nicht um die Achse der Antriebswelle rotieren kann und bei Betrieb des Antriebsmotors ortsfest relativ zum Antriebsmotor ruht.

Im nicht montieren Zustand der Schlingfeder weist diese einen Durchmesser auf, welcher gegenüber dem Durchmesser der Manteloberfläche und nach erfolgter Montage ein Übermaß darstellt. Ist die Schlingfeder nach erfolgter Montage auf eine äußere Manteloberfläche gesetzt, so ist der Innendurchmesser der unmontierten Schlingfeder etwas kleiner als der Außendurchmesser der Manteloberfläche des Koppelelements. Weil die Schlingfeder mit mehr als einer Umschlingungswindung und mit einem Übermaß auf das Koppelelement gesetzt ist, erfolgt gemäß der Eytelwein'schen Umschlingung ein Durchrutschen beziehungsweise eine Übertragung eines Drehmoments des Koppelelements in einer ersten Drehrichtung mit einer sehr geringen Höhe, was auf die übermaßgebende Federvorspannung nach erfolgter Montage zurückzuführen ist. In der zweiten Drehrichtung des Koppelelements jedoch erfolgt eine Übertragung sehr hoher Drehmomente zwischen Koppelelement und Schlingfeder, so dass bei Überschreiten einer vorbestimmten Umschlingungszahl hier praktisch eine reibschlüssig feste Verbindung gegeben ist. Die Bremseinrichtung ist so konfiguriert, dass die zweite Drehrichtung der Drehrichtung des Antriebsmotors entspricht, welche zum Bewegen des angeschlossenen Möbelbauteils in Richtung der Schwerkraft bestimmt ist.

In erfinderischer Weise ist somit eine Bremseinrichtung für einen elektromotorischen Möbelantrieb geschaffen, welche bei Bewegung des daran angeschlossenen Möbelbauteils entgegen der Schwerkraft praktisch als Freilauf ausgebildet ist und wobei das Bremselement keine oder nur eine durch das eingangs genannte Übermaß begründete geringe bremsende Ausmaß aufweist, und jedoch in der zweiten Drehrichtung der Antriebswelle das Bremselement mit dem Koppelelement eine drehfeste oder eine Drehbremsbehaftete Reibverbindung mit der Schlingfeder eingeht, so dass der Spindelantriebsstrang bei abgeschaltetem Antriebsmotor selbstgehemmt zu sein scheint und die an dem elektromotorischen Möbelantrieb angeschlossene Last sicher auf Position gehalten wird.

Als weiterer erfinderischer Aspekt ist die eingangs genannte Entkopplung nach Art einer Klauenkupplung zwischen Bremselement und Koppelelement zu sehen, weil nunmehr weder die übermaßbegründete Federvorspannung der umschlingenden Schlingfeder noch die hohen Bremskräfte durch die Schlingfeder selbst entstehend bei der zweiten Drehrichtung und diese erzeugend durch die Schlingfeder selbst keine Auswirkung auf die Bremsqualität des Bremselements haben, weil durch die spielbehaftete Verbindung zwischen Bremselement und Koppelelement keine Kräfte der Schlingfeder auf das Bremselement ausgeübt werden können sondern ausschließlich Kräfte in Umfangsrichtung in Form von Drehmomenten auf das Bremselement übertragbar sind, so dass das Bremselement unabhängig der Drehrichtung und der Krafterzeugung durch die Schlingfeder stets mit der Antriebswelle in gleicher reibschlüssiger Drehmomentmitnahmeverbindung steht.

In einer weiteren vorteilhaften Ausgestaltung des elektromotorischen Möbelantriebs ist zentral an dem Koppelelement ein Axiallager angeordnet. Das Axiallager kann beispielsweise in Form eines Gleitlagers im Wesentlichen scheibenförmig sein und durch Stege gehalten werden, die radial nach außen verlaufen. Bevorzugt liegt das Axiallager mit einer ersten Lagerfläche an einer Stirnfläche der Antriebswelle an. Alternativ oder zusätzlich kann das Axiallager mit einer zweiten Lagerfläche an einem Deckel eines Gehäuses der Bremseinrichtung anliegen. Durch das Axiallager wird eine axiale Bewegung des Koppelelements unterbunden. Eine solche Bewegung könnte zu einer axialen Schwingung des Koppelelements auf der Antriebswelle führen, die mit unerwünschten Vibrationen und einer Lärmentwicklung des Antriebsmotors einhergeht.

Die Erfindung wird nachfolgend anhand von Ausführungsbeispielen mithilfe von Figuren näher erläutert. Es zeigen:
- Fig. 1: ein Möbel mit einem elektromotorischen Möbelantrieb;
- Fig. 2: eine erste Ausführung eines Antriebsmotors mit einer Bremseinrichtung eines elektromotorischen Möbelantriebs in einer isometrischen Darstellung;
- Fig. 3: die Ausführung nach Figur 2 in einer teilweisen explosiven Darstellung; und
- Fig. 4, 5: jeweils eine isometrische Darstellung eines Koppelelements und eines Bremselements einer alternativen Ausgestaltung einer Bremseinrichtung, betrachtet aus zwei verschiedenen Richtungen.

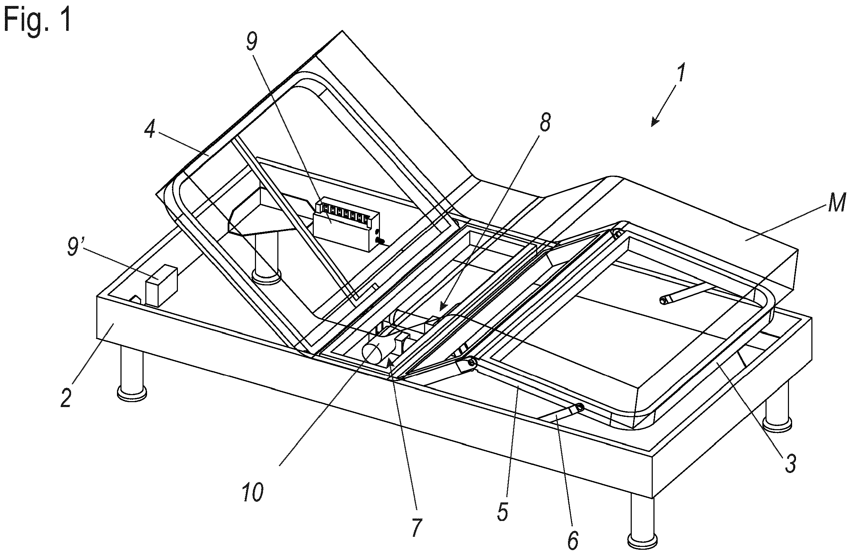

In Figur 1 ist zunächst ein Bett als Beispiels eines Möbels mit einem elektromotorischen Möbelantrieb in einer isometrischen Ansicht dargestellt.

Das Bett 1 weist wenigstens ein Stützelement 3 zur Aufnahme von z.B. einer Polsterung oder einer Matratze M auf. Das Bett 1 kann als ein Einzelbett für eine Person oder auch als Doppelbett für mehrere Personen ausgelegt sein. Das Stützelement 3 ist z.B. als ein Lattenrost, als ebene Stützfläche oder dergleichen ausgebildet und an einem Grundelement 2 montiert oder in dieses eingelegt, hier einem Gestell mit Füßen, mit dem das Bett 1 an einem Aufstellort, z.B. Fußboden, aufgestellt ist.

Das Stützelement 3 weist im dargestellten Beispiel ein Rückenteil 4 und ein Beinteil 5 auf, welche relativ zu einem hier festen mittleren Teil oder relativ zu dem Grundelement 2 beweglich gelagert angeordnet sind. Diese bewegliche Anordnung ist hier mittels eines so genannten Bewegungsbeschlags 6 realisiert. Die Bewegung ist verschiebbar und/oder schwenkbar ausgebildet.

Das beweglich gelagerte Rückenteil 4 und das Beinteil 5 sind jeweils mit einem elektromotorischen Verstellantrieb 7, 8 gekoppelt. So ist das Rückenteil 4 mit dem elektromotorischen Verstellantrieb 7 gekoppelt. Zur Bewegung bzw. Verstellung des Beinteils 5 ist der elektromotorische Verstellantrieb 8 vorgesehen.

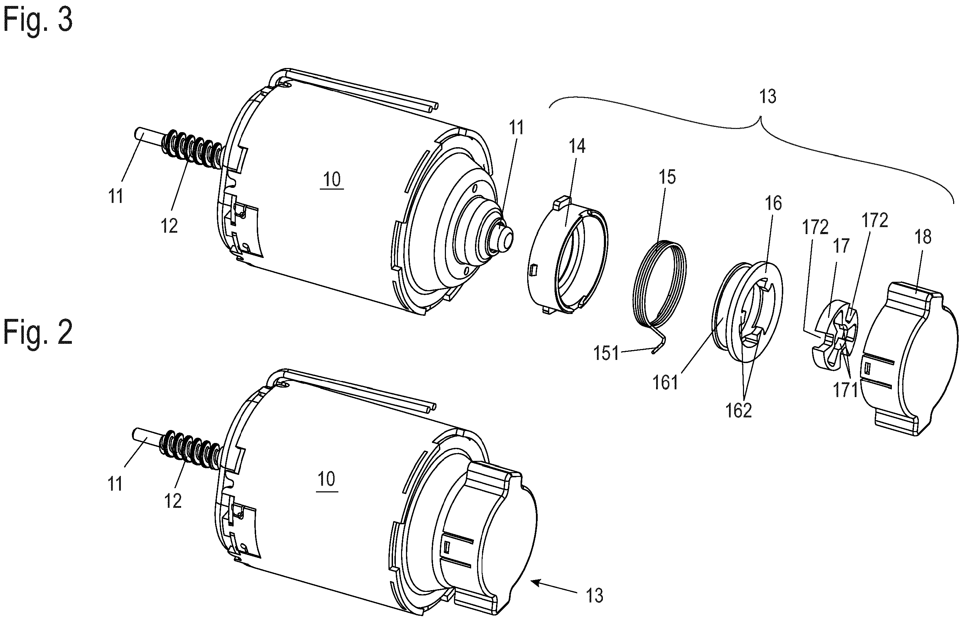

Die elektromotorischen Verstellantriebe 7, 8 sind vorliegend als Linearantriebe ausgebildet. Die Linearantriebe weisen einen oder eine Anzahl Antriebsmotoren 10 auf. Anmeldungsgemäß ist der Antriebsmotor 10 mit einer Bremseinrichtung ausgestattet, die in den nachfolgenden Figuren 2 bis 5 in verschiedenen Ausgestaltungen detaillierter dargestellt ist.

Jedem Antriebsmotor 10 ist ein Drehzahlreduziergetriebe mit wenigstens einer Getriebestufe nachgeschaltet. Dem Drehzahlreduziergetriebe kann ein weiteres Getriebe, beispielsweise in Form eines Gewindespindelgetriebes, nachgeschaltet sein, welches aus der Drehbewegung des Elektromotors eine Linearbewegung eines Abtriebsgliedes erzeugt. Das letzte Getriebeglied oder ein damit verbundenes weiteres Glied bildet das Abtriebsglied. Das Abtriebsglied des jeweiligen elektromotorischen Verstellantriebs steht mit dem jeweiligen Möbelbauteil (Rückenteil 4, Beinteil 5) oder alternativ mit einem mit dem Grundelement 2 verbundenes Bauteil in Verbindung, so dass bei einem Betrieb des Elektromotors des jeweiligen Verstellantriebs 7, 8 die beweglichen Möbelbauteile 4, 5 relativ zueinander bzw. relativ zum Grundelement 2 verstellt werden.

Die elektromotorischen Verstellantriebe 7, 8 sind mit einer Steuereinrichtung 9 verbunden. Diese Verbindung kann z.B. als steckbare Kabelverbindung ausgeführt sein, was hier nicht näher dargestellt ist. Die Steuereinrichtung 9 ist im dargestellten Beispiel mit einem externen Netzteil 9' verbunden, das über ein in diesem Beispiel nicht gezeigtes Netzkabel mit einem Netzstecker mit einem Netzanschluss verbindbar ist. Das externe Netzteil 9' stellt eine Gleichspannung im Bereich von 24-30 V zur Stromversorgung des elektromotorischen Möbelantriebs, insbesondere der elektromotorischen Verstellantriebe 7, 8, bereit. In einer alternativen Ausgestaltung kann ein Netzteil in der Steuereinrichtung 9 integriert sein, so dass auf das externe Netzteil 9' verzichtet werden kann und die Steuereinrichtung 9 unmittelbar mit einem Netzkabel an das Lichtnetz angeschlossen wird.

In Figur 2 ist ein Antriebsmotor 10 eines elektromotorischen Möbelantriebs, beispielsweise des in Figur 1 gezeigt elektromotorischen Möbelantriebs, separat dargestellt. Der Antriebsmotor 10 weist eine Antriebswelle 11 mit einer Verzahnung 12 auf, sowie eine Bremseinrichtung 13. Die Verzahnung 12 steht mit einer in der Figur 2 nicht dargestellten Verzahnung eines Getrieberades in Verbindung. Die Bremseinrichtung 13 ist bei dem dargestellten Beispiel entfernt und gegenüberliegend der Verzahnung 12 auf der anderen Seite des Antriebsmotors 10 angeordnet. In alternativen Ausgestaltungen ist es auch möglich, die Verzahnung 12 und die Bremseinrichtung 13 auf derselben Motorseite anzuordnen.

Figur 3 zeigt die Anordnung gemäß Figur 2 in teilweise explosiver Darstellung, um den inneren Aufbau der Bremseinrichtung 13 und deren Zusammenwirken mit der Antriebswelle 11 wiedergeben zu können. In der Darstellung nach Figur 3 steht die Antriebswelle 11 auch auf der Seite, auf der die Bremseinrichtung 13 angeordnet ist, relativ zum Gehäuse des Antriebsmotors 10 hervor. Auf die Antriebswelle 11 ist ein Bremselement 17 aufgesetzt. Die lichte Innenweite des Bremselements 17 im nicht montierten Zustand ist etwas kleiner als der Außendurchmesser der Antriebswelle 11, so dass das Bremselement 17 mit Bremsabschnitten 171, die die Form von Hohlzylinderabschnitten haben, eine reibschlüssige Übermaßverbindung mit der Antriebswelle 11 eingeht. Dabei ist das Übermaß so eingestellt, dass im Normalbetriebszustand des Antriebsmotors 10 stets ein Durchrutschen des Bremselements 17 auf der Antriebswelle 11 erfolgt. Das Bremselement 17 ist im Querschnitt betrachtet mäanderförmig sowie aus einem elastischen Werkstoff geformt, so dass eine kontinuierliche übermaßbegründete und reibschlüssige Federvorspannung der lichten Innenweite gegenüber der Antriebswelle erfolgt.

Ferner ist dem Bremselement 17 ein Koppelelement 16 zugeordnet, wobei die Verbindung zwischen Bremselement 17 und Koppelelement 16 im montierten Zustand spielbehaftet ist. Somit können ausschließlich umfangsseitige Kräfte in Form von Drehmomenten zwischen Bremselement 17 und Koppelement 16 ausgetauscht und übertragen werden. Andere Kräfte, wie beispielsweise Radialkräfte, die durch die Schlingfeder 15 auf das Koppelelement ausgeübt werden, werden somit nicht auf das Bremselement 17 übertragen, so dass diese das Bremselement 17 nicht beeinflussen.

Das Koppelement 16 weist eine äußere Manteloberfläche auf, auf welche eine Schlingfeder 15 mit mehr als einer Windung aufgesetzt ist. In dieser Ausführung ist die Schlingfeder 15 aus einem Stahldraht geformt, wobei der Stahldraht einen runden Querschnitt aufweist. Ein freies Ende der gewickelten Schlingfeder 15 ist als Halteelement 151 in diesem Beispiel in Form eines Hakens ausgebildet. Die Schlingfeder 15, das Koppelement 16 und das Bremselement 17 sind gemäß dieser Ausführung in einem Gehäuse 14 mit einem Deckel 18 angeordnet. Das Gehäuse 14 ist fest an den Antriebsmotor 10 ansetzbar ausgebildet. Schließlich ist in der Normalbetriebsstellung des Antriebsmotors 10 das Halteelement 151 der Schlingfeder ortsfest zum Gehäuse des Antriebsmotors 10 angeordnet.

Die Anordnung bestehend aus Schlingfeder 15, Koppelelement 16 und Bremselement 17 ist ferner nach Art eines Baukastensystems aufgebaut. Es ist somit auch möglich, dass beispielsweise durch Austausch des Bremselements 17 durch ein anderes ein angepasster Bremscharakter des Antriebsmotors 10 und somit ein anderes Maß der Selbsthemmung des daran angeschlossenen Spindelmutter-Hubgetriebes ausbildbar ist. Ferner weist das Gehäuse 14, 18 oder ein Abschnitt des Gehäuses 14, 18 oder ein Abschnitt des Gehäuses des Antriebsmotors 10 mehr als eine Halteeinrichtung zur Befestigung des Halteelements 19 auf, so dass die Montage der Schlingfeder 15 wahlweise in einer ersten oder in einer zweiten Richtung relativ zur Antriebswelle 11 erfolgen kann. Dabei ist die Wickelrichtung der Schlingfeder 15 nach erfolgter Montage entweder in Uhrzeigerrichtung oder entgegen der Uhrzeigerrichtung gerichtet angeordnet, so dass der Antriebsmotor 10 beziehungsweise die Bremseinrichtung 13 wahlweise ein Bremsdrehmoment entweder in einer ersten oder in einer zweiten Drehrichtung der Antriebswelle 11 erfährt.

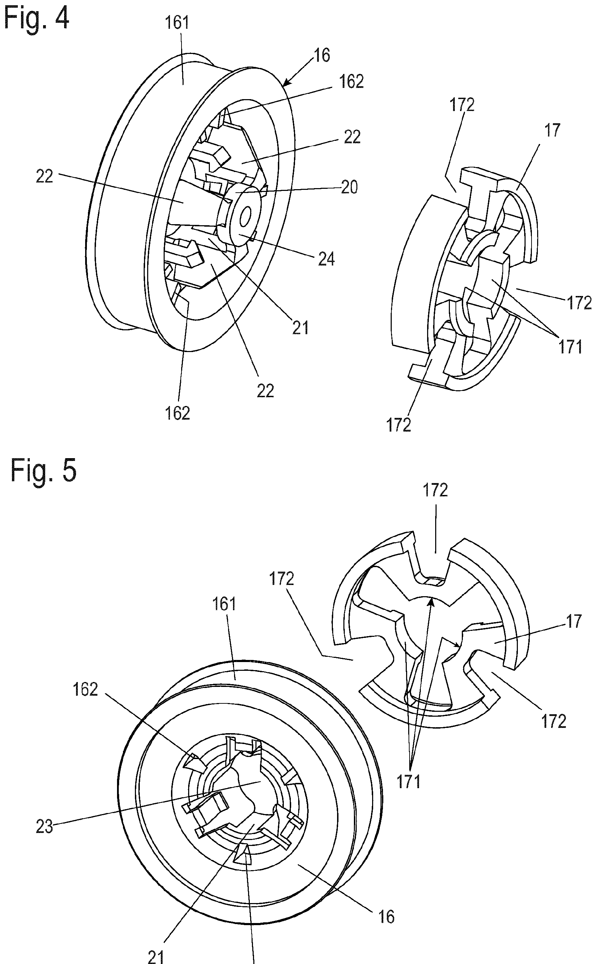

Die Figuren 4 und 5 illustrieren eine Variante des Koppelelements 16 und des Bremselements 17 in einer Explosionsdarstellung. Die beiden Figuren geben die genannten Elemente aus unterschiedlichen Richtungen wieder. Das Koppelelement 16 weist gemäß dieser Ausführung ein Axiallager 20 auf, welches im Drehmittelpunkt angeordnet über Stege 22 mit dem Grundkörper des Koppelelements 16 verbunden ist.

Das Axiallager 20 weist eine der Antriebswelle 11 zugewandte erste Lagerfläche 23 auf, welche zumindest abschnittsweise für eine gleitlagernde Verbindung mit der Antriebswelle 11 ausgebildet ist. Die der Antriebswelle 11 abgewandte zweite Lagerfläche 24 ist zumindest abschnittsweise für eine gleitlagernde Verbindung mit dem Deckel 18 ausgebildet. Zumindest eine der Lagerflächen 23, 24 geht mit der korrespondierenden Antriebswelle 11 beziehungsweise mit dem Deckel 18 eine Punktlagerverbindung oder eine punktlagerähnliche Verbindung ein, wobei die jeweilige axiale Lagerung im Drehmittelpunkt der Antriebswelle 11 gegründet ist. Alternativ ist wenigstens eine der Lagerflächen 23, 24 als flächige Lagerfläche 23, 24 ausgebildet. In der Figur 4 ist zentral in der Lagerfläche 24 ein Spritzguss-Ansatzpunkt zu erkennen. Dieser ist vertieft ausgeführt, so dass Ansatzmaterial nicht über die Lagerfläche 24 hervorsteht.

Die Stege 22 selbst weisen Laufflächen 21 auf, welche in einer Gleitlagerverbindung mit der Antriebswelle 11 stehen. Dabei ist diese Gleitlagerverbindung als Übergangspassung mit Spiel oder allenfalls mit geringfügigem Übermaß ausgebildet, so dass die Laufflächen 21 eine zentrierende und stützende Wirkung auf das Koppelelement 16 ausüben, sowie dieses konzentrisch zur Antriebswelle 11 stützen und lagern zu können, was insbesondere die Laufruhe der Bremseinrichtung 13 gewährleistet.

Eingangs ist näher beschrieben, dass das Gehäuse 14 als einstückiges Formteil mit einem Gehäuseabschnitt des Antriebsmotors 10, beispielswiese mit dem Boden beziehungsweise mit einem Lagerschild des Antriebsmotors 10, ausgeführt ist. In einer Weiterbildung des Beispiels der Figur 3, jedoch nicht näher dargestellt, weisen Antriebsmotor 10 und Gehäuse 14 Einschnitte, Vorsprünge, Ansätze und/oder Einziehungen auf, welche ineinandergreifend zueinander korrespondierend ausgebildet sind und somit als Befestigungsmittel zur Befestigung des Gehäuses 14 an dem Antriebsmotor 10 Verwendung finden. Erste Befestigungsmittel sind als nicht lösbare Befestigungsmittel ausgebildet, so dass die Verbindung zwischen Gehäuse 14 und Antriebsmotor 10 als einstückig zu sein scheint. Weitere und somit alternative Befestigungsmittel sind als Steck-Klemm-Befestigung ausgebildet. Andere Befestigungsmittel umfassen wenigstens ein Verrastungsmittel. Auch Kombinationen von verschiedenen Befestigungsmitteln können Verwendung finden.

### Bezugszeichenliste

- 1: Bett
- 2: Grundelement
- 3: Stützelement
- 4: Rückenteil
- 5: Beinteil
- 6: Bewegungsbeschlag
- 7,8: Verstellantrieb
- 9: Steuereinrichtung
- 9': Netzteil
- M: Matratze

- 10: Antriebsmotor
- 11: Antriebswelle
- 12: Verzahnung
- 13: Bremseinrichtung
- 14: Gehäuse
- 15: Schlingfeder
- 151: Halteelement
- 16: Koppelelement
- 161: Mantelfläche
- 162: Klaue
- 17: Bremselement
- 171: Bremsabschnitt
- 172: Ausnehmung
- 18: Deckel

- 20: Axiallager
- 21: Lauffläche
- 22: Steg
- 23: erste Lagerfläche
- 24: zweite Lagerfläche

## Patentansprüche

1. Elektromotorischer Möbelantrieb mit einem Antriebsmotor (10), wobei der Antriebsmotor (10) eine Antriebswelle (11) aufweist, die mit einer Bremseinrichtung (13) mechanisch gekoppelt ist, wobei die Bremseinrichtung (13) eine umschlingende Schlingfeder (15) aufweist, wobei die Bremseinrichtung (13) ein Bremselement (17) umfasst, welches dazu ausgebildet ist, die Antriebswelle (11) in einer Drehrichtung mit einem Bremsdrehmoment zu beaufschlagen, wobei das Bremselement (17) in mechanischer Wirkverbindung mit einem Koppelelement (16) steht, und wobei die Schlingfeder (15) auf eine äußere Manteloberfläche (161) des Koppelements (16) aufgesetzt ist, **dadurch gekennzeichnet,**
**dass** das Bremselement (17) auf die Antriebswelle (11) aufgesetzt ist und dass eine lichte Innenweite des Bremselements (17) in einem nicht montierten Zustand etwas kleiner ist als ein Außendurchmesser der Antriebswelle (11).

2. Elektromotorischer Möbelantrieb nach Anspruch 1, bei dem die Verbindung zwischen dem Bremselement (17) und dem Koppelelement (16) formschlüssig ist.

3. Elektromotorischer Möbelantrieb nach Anspruch 1 oder 2, **dadurch gekennzeichnet, dass** die Verbindung zwischen dem Bremselement (17) und dem Koppelelement (16) spielbehaftet ausgebildet ist.

4. Elektromotorischer Möbelantrieb nach Anspruch 2 und 3, bei dem die Verbindung zwischen dem Bremselement (17) und dem Koppelelement (16) durch eine Klauenkupplung gebildet ist.

5. Elektromotorischer Möbelantrieb nach Anspruch 4, bei dem das Koppelelement (16) wenigstens eine radial nach innen weisende Klaue (162) aufweist, die in eine korrespondierende Ausnehmung (172) des Bremselements (17) eingreift.

6. Elektromotorischer Möbelantrieb nach einem der Ansprüche 1 bis 5, bei dem die Schlingfeder (15) das Koppelelement (16) mit mehr als einer Windung umschlingt.

7. Elektromotorischer Möbelantrieb nach einem der Ansprüche 1 bis 6, bei dem die Schlingfeder (15) an einem freien Ende ein Halteelement (151) aufweist, das ortsfest zu einem Gehäuse des Antriebsmotors (10) befestigt ist.

8. Elektromotorischer Möbelantrieb nach Anspruch 7, bei dem das Halteelement (151) über ein Gehäuse (14) der Bremseinrichtung (13) ortsfest zu dem Gehäuse des Antriebsmotors (10) befestigt ist.

9. Elektromotorischer Möbelantrieb nach einem der Ansprüche 6 bis 8, bei dem das Halteelement (151) ein Haken ist, der aus einem Endabschnitt der Schlingfeder (15) ausgeformt ist.

10. Elektromotorischer Möbelantrieb nach einem der Ansprüche 1 bis 9, bei dem die Antriebswelle (11) ferner mit einer Verzahnung (12) zum Antrieb einer Getriebestufe ausgestattet ist.

11. Elektromotorischer Möbelantrieb nach Anspruch 10, bei dem die Bremseinrichtung (13) und die Verzahnung (12) an unterschiedlichen Seiten des Antriebsmotors an der Antriebswelle (11) angeordnet sind.

12. Elektromotorischer Möbelantrieb nach einem der Ansprüche 1 bis 11, bei dem zentral an dem Koppelelement (17) ein Axiallager (20) angeordnet ist.

13. Elektromotorischer Möbelantrieb nach Anspruch 12, bei dem das Axiallager (20) mit einer ersten Lagerfläche (23) an einer Stirnfläche der Antriebswelle (11) anliegt.

14. Elektromotorischer Möbelantrieb nach Anspruch 12 oder 13, bei dem das Axiallager (20) mit einer zweiten Lagerfläche (24) an einem Deckel (18) eines Gehäuses (14) der Bremseinrichtung (13) anliegt.

## Claims

1. Electromotive furniture drive having a drive motor (10), wherein the drive motor (10) has a drive shaft (11) which is mechanically coupled to a brake device (13), wherein the brake device (13) has a looping wrap spring (15), wherein the brake device (13) comprises a brake element (17), which is designed to apply a braking torque to the drive shaft (11) in one direction of rotation, wherein the brake element (17) is in mechanical operative connection with a coupling element (16), and wherein the wrap spring (15) is placed on an outer jacket surface (161) of the coupling element (16), **characterized in that** the brake element (17) is mounted on the drive shaft (11) of the electromotive furniture drive, and that the brake element (17) has an internal clearance in the unassembled state that is slightly smaller than the external diameter of the drive shaft (11).

2. Electromotive furniture drive according to claim 1, in which the connection between the brake element (17) and the coupling element (16) is positive-locking.

3. Electromotive furniture drive according to claim 1 or 2, **characterized in that** the connection between the brake element (17) and the coupling element (16) is designed with play.

4. Electromotive furniture drive according to claims 2 and 3, in which the connection between the brake element (17) and the coupling element (16) is formed by a claw coupling.

5. Electromotive furniture drive according to claim 4, in which the coupling element (16) has at least one claw (162) which faces radially inwards and engages in a corresponding recess (172) of the brake element (17).

6. Electromotive furniture drive according to one of claims 1 to 5, in which the wrap spring (15) wraps around the coupling element (16) with more than one turn.

7. Electromotive furniture drive according to one of claims 1 to 6, in which the wrap spring (15) has at a free end a retaining element (151) fixedly attached to a housing of the drive motor (10).

8. Electromotive furniture drive according to claim 7, in which the retaining element (151) is fixed via a housing (14) of the brake device (13) in a stationary manner relative to the housing of the drive motor (10).

9. Electromotive furniture drive according to one of claims 6 to 8, in which the retaining element (151) is a hook formed from an end section of the wrap spring (15).

10. Electromotive furniture drive according to one of claims 1 to 9, in which the drive shaft (11) is further equipped with a toothing (12) for driving a gear stage.

11. Electromotive furniture drive according to claim 10, in which the brake device (13) and the toothing (12) are arranged on different sides of the drive motor on the drive shaft (11).

12. Electromotive furniture drive according to one of claims 1 to 11, in which an axial bearing (20) is arranged centrally on the coupling element (17).

13. Electromotive furniture drive according to claim 12, in which the axial bearing (20) rests with a first bearing surface (23) against an end face of the drive shaft (11).

14. Electromotive furniture drive according to claim 12 or 13, in which the axial bearing (20) has a second bearing surface (24) on a cover (18) of a housing (14) of the brake device (13).

## Revendications

1. Entraînement de meuble à moteur électrique avec un moteur d'entraînement (10), dans lequel le moteur d'entraînement (10) présente un arbre d'entraînement (11) qui est couplé mécaniquement à un dispositif de freinage (13), lequel dispositif de freinage (13) comprend un ressort enroulé (15) qui l'entoure, dans lequel le dispositif de freinage (13) comprend un élément de freinage (17) conçu pour appliquer un couple de freinage à l'arbre d'entraînement (11) dans un sens de rotation, dans lequel l'élément de freinage (17) est en liaison active avec un élément de couplage (16) et le ressort enroulé (15) est posé sur une surface d'enveloppe extérieure (161) de l'élément de couplage (16), **caractérisé en ce que** l'élément de freinage (17) est posé sur l'arbre d'entraînement (11) et **en ce qu'**une largeur intérieure libre de l'élément de freinage (17) dans un état non monté est un peu plus petite qu'un diamètre extérieur de l'arbre d'entraînement (11).

2. Entraînement de meuble à moteur électrique selon la revendication 1, dans lequel la liaison entre l'élément de freinage (17) et l'élément de couplage (16) se fait en correspondance de forme.

3. Entraînement de meuble à moteur électrique selon la revendication 1 ou 2, **caractérisé en ce que** la liaison entre l'élément de freinage (17) et l'élément de couplage (16) comporte un jeu.

4. Entraînement de meuble à moteur électrique selon les revendications 2 et 3, dans lequel la liaison entre l'élément de freinage (17) et l'élément de couplage (16) est formée par un accouplement à griffes.

5. Entraînement de meuble à moteur électrique selon la revendication 4, dans lequel l'élément de couplage (16) présente au moins une griffe (162) dirigée vers l'intérieur dans le sens radial, qui se met en prise dans un évidement (172) correspondant de l'élément de freinage (17).

6. Entraînement de meuble à moteur électrique selon l'une des revendications 1 à 5, dans lequel le ressort enroulé (15) entoure l'élément de couplage (16) avec plus d'une spire.

7. Entraînement de meuble à moteur électrique selon l'une des revendications 1 à 6, dans lequel le ressort enroulé (15) présente à une extrémité libre un élément de maintien (151) qui est fixé de façon stationnaire à un boîtier du moteur d'entraînement (10).

8. Entraînement de meuble à moteur électrique selon la revendication 7, dans lequel l'élément de maintien (151) est fixé au boîtier du moteur d'entraînement (10) par l'intermédiaire d'un boîtier (14) du dispositif de freinage (13).

9. Entraînement de meuble à moteur électrique selon l'une des revendications 6 à 8, dans lequel l'élément de maintien (151) est un crochet qui est formé à partir d'une partie d'extrémité du ressort enroulé (15).

10. Entraînement de meuble à moteur électrique selon l'une des revendications 1 à 9, dans lequel l'arbre d'entraînement (11) est muni en outre d'une denture (12) pour l'entraînement d'un étage d'engrenages.

11. Entraînement de meuble à moteur électrique selon la revendication 10, dans lequel le dispositif de freinage (13) et la denture (12) sont disposés sur l'arbre d'entraînement (11) sur des côtés différents du moteur d'entraînement.

12. Entraînement de meuble à moteur électrique selon l'une des revendications 1 à 11, dans lequel un palier axial (20) est disposé au centre sur l'élément de couplage (17).

13. Entraînement de meuble à moteur électrique selon la revendication 12, dans lequel le palier axial (20) repose par une première surface d'appui (23) sur une face d'extrémité de l'arbre d'entraînement (11).

14. Entraînement de meuble à moteur électrique selon la revendication 12 ou 13, dans lequel le palier axial (20) repose par une deuxième surface d'appui (24) sur un couvercle (18) d'un boîtier (14) du dispositif de freinage (13).
